# EUROPEAN PATENT APPLICATION

(11) **EP 4 826 974 A1**
(43) Date of publication of application: **21.10.2026**
(21) Application number: 26169810.4
(22) Date of filing: 31.03.2026
(51) Int. Cl.: H02M 1/00, H02M 1/36, H02M 3/07, H02M 3/158

(54) **SYSTEM AND METHOD FOR CHARGING A COMPENSATOR CAPACITANCE IN A DC-DC CONVERTER**

(30) Priority: 16.04.2025 US 202519180625
(71) Applicant: NXP B.V., 5656 AG Eindhoven (NL)
(72) Inventor: Talamo, Salvadore Frederick, 5656 AG Eindhoven (NL); Pigott, John, 5656 AG Eindhoven (NL); Pakala, Sri Harsh, 5656 AG Eindhoven (NL); Christiaans, Peter, 5656 AG Eindhoven (NL)
(74) Representative: Krott, Michel

(57) **Abstract**

DC-DC converters and converter systems, compensator circuits therefor, and related methods are disclosed herein. In a first example embodiment, a DC-DC converter comprises an amplifier circuit, a compensator circuit, and a control circuit. The compensator circuit includes an error amplifier, a comparator, and an intermediate circuit network. The intermediate circuit network includes a first node, at least one first switchable component coupling the first node with a first output terminal of the error amplifier, and a plurality of switched capacitor networks each having a respective capacitor. The control circuit is configured at a first time to cause the respective capacitors to attain respective voltages, and the control circuit is configured at a second time to cause the respective capacitors of the respective switched capacitor networks to be coupled to the first node so that the first node attains a compensator voltage.

## Description

### FIELD OF THE DISCLOSURE

The present disclosure relates to direct current to direct current ("DC-DC") converter-related systems and methods and, more particularly, relates to systems and methods for charging compensator capacitances in or in relation to DC-DC converters, for example, as may be suitable during transitions from light load to heavy load operation.

### SUMMARY

The present disclosure relates to systems and methods of operating DC-DC converters, including for example buck converters, boost converters, and buck-boost converters.

In a first example embodiment, a DC-DC converter comprises an amplifier circuit including an output power circuit and a feedback circuit, a compensator circuit coupled to the amplifier circuit, and a control circuit. The compensator circuit includes an error amplifier, a comparator, and an intermediate circuit network. The error amplifier has a first input terminal and a first output terminal, the comparator has a second input terminal and a second output terminal, the second input terminal is coupled to the first output terminal of the error amplifier and the second output terminal is coupled to a further input terminal of the output power circuit. Also, the intermediate circuit network includes a first node, at least one first switchable component coupling the first node with the first output terminal of the error amplifier, and a plurality of switched capacitor networks each having a respective capacitor. The control circuit is coupled to each of the switched capacitor networks. Further, the control circuit is configured at a first time to cause the respective capacitors of the respective switched capacitor networks to attain respective voltages, and the control circuit is configured at a second time to cause the respective capacitors of the respective switched capacitor networks to be coupled to the first node so that the first node attains a compensator voltage.

In one such example embodiment, each of the respective capacitors of the respective switched capacitor networks is coupled to the first node by a respective capacitor connection switch, the control circuit is configured to provide first control signals to the plurality of switched capacitor networks at the first time to cause the respective capacitors of the respective switched capacitor networks to attain respective voltages, the control circuit is configured to provide second control signals to the plurality of switched capacitor networks at the second time to cause the respective capacitors of the respective switched capacitor networks to be coupled to the first node so that the first node attains the compensator voltage, and the control circuit is further configured to provide third control signals to the plurality of switched capacitor networks at a third time to cause the respective capacitor or the respective capacitors of one or more of the respective switched capacitor networks to be decoupled from the first node, so that a desired compensation capacitance remains coupled to the first node.

In one such example embodiment, at the first time, the DC-DC converter is operating in a first operational mode that is at least one of a light load operational mode, a no load operational mode, or a pulse-frequency modulation (PFM) operational mode.

In one such example embodiment, the second time occurs at or just prior to an additional time at which the DC-DC converter switches from the first operational mode to a second operational mode that is one of a medium load operational mode, a high load operational mode, a heavy load operational mode, a medium-to-high load operational mode, a medium-to-heavy load operational mode, or a pulse-width modulation (PWM) operational mode.

In one such example embodiment, at the third time, the DC-DC converter is operating in the second operational mode, and the control circuit operates at least in part based upon a digital finite state machine (FSM) or a look-up table (LUT).

In one such example embodiment, each of the switched capacitor networks includes a respective internal node, a respective first switch, and a respective second switch, where the respective first switch is coupled between the respective internal node and a ground node, where the respective second switch is the respective capacitor connection switch of the respective switched capacitor network and is coupled between the respective internal node and the first node, and where each of the respective capacitors of the respective switched capacitor networks is respectively coupled between the respective internal node and the ground node.

In one such example embodiment, with respect to one or more of the switched capacitor networks, the respective switched capacitor network includes a respective third switch and the respective third switch is coupled between the respective internal node and a power source node.

In one such example embodiment, the at least one first switchable component includes a parallel combination of a stabilization resistor and a transfer switch, where each of the stabilization resistor and the transfer switch is coupled at least indirectly between the first node and first output terminal, and where the DC-DC converter additionally includes a high-frequency capacitor coupled at least indirectly between the first output terminal and the ground node.

In one such example embodiment, the DC-DC converter is at least one of a buck converter, a boost converter, or a buck-boost converter, and the control circuit is comprised by the compensator circuit.

In a second example embodiment, a compensator circuit for a DC-DC converter comprises a comparator amplifier having a first input terminal and a first output terminal, and a pulse-width modulation (PWM) comparator having a second input terminal and a second output terminal, the second input terminal being coupled at least indirectly to the first output terminal of the comparator amplifier. The compensator circuit also comprises an intermediate circuit network includes an integrator node, at least one first switchable component at least indirectly coupling the integrator node with the first output terminal of the comparator amplifier, and a plurality of switched capacitor networks. Each of the switched capacitor networks includes a respective capacitor, a respective internal node, a respective first switch, and a respective second switch. Also, each of the respective first switches is respectively coupled between the respective internal node and either a ground node or a respective first voltage node, where each the respective second switches is respectively coupled between the respective internal node and the integrator node, and where each of the respective capacitors is respectively coupled to the respective internal node. Additionally, the respective second switches are controlled so that, at a first time, each of the respective capacitors is coupled to the integrator node so that the integrator node attains a first voltage or a first charge level, and at a second time, at least one of the capacitors remains coupled to the integrator node so as to serve as a compensator capacitor.

In one such example embodiment, with respect to one or more of the switched capacitor networks, the respective switched capacitor network includes a respective third switch and the respective third switch is coupled between the respective internal node and a respective additional voltage node.

In one such example embodiment, each of the respective first switches is respectively coupled between the respective internal node and the ground node, where the respective additional voltage node is a power source node, and where each of the respective capacitors of the respective switched capacitor networks is coupled between the respective node and the ground node.

In one such example embodiment, the at least one first switchable component includes a parallel combination of a stabilization resistor and a transfer switch, where each of the stabilization resistor and the transfer switch is coupled at least indirectly between the integrator node and first output terminal, and where the compensator circuit additionally includes a high-frequency capacitor coupled at least indirectly between the first output terminal and the ground node.

In one such example embodiment, the compensator circuit further comprises a control circuit coupled at least indirectly to, and configured to provide control signals to actuate each of, the respective first switches, the respective second switches, the respective third switches, and the transfer switch.

In one such example embodiment, the plurality of switched capacitor networks includes at least three and not more than ten of the capacitors, and the respective capacitors have respective capacitance values that are related in a binary manner.

In a third example embodiment, the present disclosure relates to a method of controlling a DC-DC converter having an amplifier circuit coupled to a compensator circuit, the compensator circuit including an integrator node and a plurality of switched capacitor networks each having a respective capacitor and a respective capacitor connection switch at least indirectly between the respective capacitor and the integrator node. The method comprises, at a first time at which the DC-DC converter is operating in a first operational mode, first actuating the respective capacitor connection switches of the respective switched capacitor networks to decouple the respective capacitors of the respective switched capacitor networks from the integrator node so that the respective capacitors can be set to have respective capacitor voltages. Also, the method comprises, at a second time subsequent to the first time, second actuating the respective capacitor connection switches of the respective switched capacitor networks so that all of the respective capacitors are coupled to the integrator node, so as to establish a compensator voltage at the integrator node. Additionally, the method comprises, at a third time at which the DC-DC converter is operating in a second operational mode, the third time being subsequent to the second time, third actuating a first subset of the capacitor connection switches of the plurality of switched capacitor networks so that each of a first subset of the capacitors of the plurality of switched capacitor networks is decoupled from the integrator node even though each of a second subset of the capacitors of the plurality of switched capacitor networks remains coupled to the integrator node so that a compensation capacitance is coupled to the integrator node.

In one such example embodiment, the first actuating, the second actuating, and the third actuating are caused by control signals provided by at least one control circuit.

In one such example embodiment, at the first time, the at least one control circuit provides first additional control signals that cause respective additional switches that are coupled between the respective capacitors and respective additional nodes to be closed so that respective additional nodes are coupled at least indirectly to the respective capacitors and so that the respective capacitors are set to have the respective capacitor voltages, and at the second time, the at least one control circuit provides second additional control signals that cause the respective additional switches that are coupled between the respective capacitors and the respective additional nodes to be opened.

In one such example embodiment, the first operational mode is at least one of a light load operational mode, a no load operational mode, or a pulse-frequency modulation (PFM) operational mode, and the second operational mode is one of a medium load operational mode, a high load operational mode, a heavy load operational mode, a medium-to-high load operational mode, a medium-to-heavy load operational mode, or a pulse-width modulation (PWM) operational mode, and the second time occurs at or just prior to a transition time at which the DC-to-DC converter changes from being in the first operational mode to being in the second operational mode.

In one such example embodiment, the compensation circuit includes a parallel combination of a stabilization resistor and a transfer switch, where each of the stabilization resistor and the transfer switch is coupled at least indirectly between the integrator node a first output terminal of a comparator of the compensation circuit, and the method further comprises actuating the transfer switch to short out the stabilization resistor at least during a first time period between the second time and the third time.

### BRIEF DESCRIPTION OF THE DRAWINGS

Specific examples have been chosen for purposes of illustration and description, and are shown in the accompanying drawings, forming a part of the specification.
FIG. 1 is a schematic diagram showing an example DC-DC converter (or DC-DC converter circuit) having a compensator (or compensator circuit) in accordance with an example embodiment encompassed herein;
FIG. 2 is a flow chart illustrating an example manner of operation of the DC-DC converter of FIG. 1; and
FIG. 3 is a timing diagram illustrating an example manner of operation of the DC-DC converter of FIG. 1.

While various embodiments discussed herein are amenable to modifications and alternative forms, aspects thereof have been shown by way of example in the drawings and are described in detail herein. It should be understood, however, that the disclosure is not limited to the particular embodiments described, and instead is meant to include all modifications, equivalents, and alternatives falling within the scope of the disclosure. In addition, the terms "example" and "embodiment" as used throughout this application is only by way of illustration, and not limitation, the Figures are not necessarily drawn to scale, and the use of the same reference symbols in different drawings indicates similar or identical items unless otherwise noted. The term "configured to" as used herein with respect to a component being "configured to" have certain structural characteristics in specified circumstances or to perform a specified function means that the component is structurally formed such that the component meets the structural characteristics in the specified circumstances or performs the function without further modification. The term "operatively connected" herein means that the two components electrically connected, whether directly or indirectly, in such a way that the disclosed signals are passed at least from one of the components to the other. The term "about" as used herein with reference to any measurement or physical characteristic means approximately, and includes the stated measurement or physical characteristic plus or minus an amount that is within an acceptable margin of error or other amount of variance that maintains the desired functionality.

### DETAILED DESCRIPTION

The present technology relates to systems and methods of controlling DC-DC converters, including for example buck converters, boost converters, and buck-boost converters. As used herein, the term "buck-boost converter" should be understood to encompass any buck converter, boost converter, and/or buck-boost converter. It should also be understood that the systems and methods described herein may be applicable to any type of DC-DC converter, including for any type of DC-DC converter that can experience a transition from a low quiescent, pulse-frequency modulation (PFM), light load, or no load (or light or zero current) mode or condition, to a medium or high current (or medium or high load), or pulse-width modulation (PWM) mode or condition.

DC-DC converters require high efficiency even when operating in light or no-load conditions. In light or no-load conditions, many circuits are turned off or run in a light bias condition. For example, one circuit that desirably is shut down or lightly biased is the compensation error amplifier.

Even though it is desirable for one or more circuits to be turned off or run in a light bias condition in light or no-load conditions, when the output load current increases suddenly, it is important that such one or more circuits be turned on quickly to prevent significant output voltage droop.

Notwithstanding such concerns, many DC-DC circuits are disadvantageous in that the circuits continue to draw DC current during light or no-load operation, or allow compensator capacitors to discharge to an undesirable (e.g., undesirably-low) voltage, or employ undesirably-complex active or passive clamping circuits to maintain the voltage of the compensator capacitors at a desired level.

For at least one or more of these reasons, or one or more other reasons, it would be advantageous if new or improved systems could be developed, and/or improved methods of operation or implementation could be developed, so as to address any one or more of the concerns discussed above or to address one or more other concerns or provide one or more benefits.

The present inventors have recognized the above-described concerns associated with DC-DC converters. In this regard, the present inventors have further recognized that, to achieve enhanced performance of a DC-DC converter when transitioning from a light or no-load condition to an increased-load operational condition, it would be desirable if, prior to such transitioning, the output voltage of the error amplifier was pre-positioned to a voltage that allowed the DC-DC converter to respond quickly to the increase in load. Further, the present inventors have also recognized that, in at least some DC-DC converters, the compensation components (particularly capacitor(s)) that are connected to the output of the error amplifier can leak if those compensation components remain floating during light or no-load conditions. Additionally, the present inventors have recognized that, to achieve enhanced performance of a DC-DC converter, it would be desirable if the capacitor voltage of such capacitor(s) was supported in some manner.

In view of these considerations, the present inventors have realized that an improved DC-DC converter can be achieved, in at least some embodiments, by employing a switched capacitor network (or bank of switched capacitors, switched capacitor circuit, or switched capacitor architecture) that is used to form the compensation capacitors of the DC-DC converter. In at least some embodiments, the capacitors of the switched capacitor network also are used (or serve) as the compensation capacitors. In at least some embodiments, such an improved DC-DC converter operates to charge the compensation capacitances of the DC-DC converter prior to entering medium-to-heavy (or medium-to-high, or at least medium) load operation. Also, in at least some embodiments, such an improved DC-DC converter circuit pre-positions the compensator capacitors' voltage using a bank of switched capacitors that presets the compensation circuit voltage to a predetermined voltage which allows smooth startup into heavy load operation. Further, in at least some embodiments, the switched capacitors that develop the voltage within the improved DC-DC converter also act as the compensation capacitors in the improved DC-DC converter.

By implementing such a switched capacitor circuit (or bank of switched capacitors, switched capacitor circuit, or switched capacitor architecture) in such an improved DC-DC converter, the improved DC-DC converter can be operated in accordance with a method that involves pre-setting the voltage of the capacitors in the compensation circuit of the DC-DC converter quickly and without any DC bias current requirement. Also, advantageously, the improved DC-DC converter can draw zero DC current (or substantially zero DC current) during light or no-load operation (during which zero DC current draw improves efficiency).

Further, depending upon the embodiment, the improved DC-DC converter can be used as a standalone biasing circuit or with a digital control loop. More particularly, depending upon the embodiment, the switched capacitor network of the improved DC-DC converter can be used as a standalone circuit with no external digital control network or it can be controlled by an external digital controller. Further, in at least some embodiments encompassed herein, the improved DC-DC converter not only uses zero (or substantially zero) DC current during light or no-load operation, but also provides the flexibility of charging the capacitors to a desired pre-programmed voltage before entering heavy load operation. Also, in at least some such embodiments, the pre-programmed voltage is programmable by memory or by a digital controller to a wide range of values and, additionally, the wide range of values can be used to improve the performance of the DC-DC converter when entering pulse-width modulation (PWM) operation. Indeed, in at least some embodiments encompassed herein, the compensation capacitor values and voltages can be changed dynamically by an external digital controller.

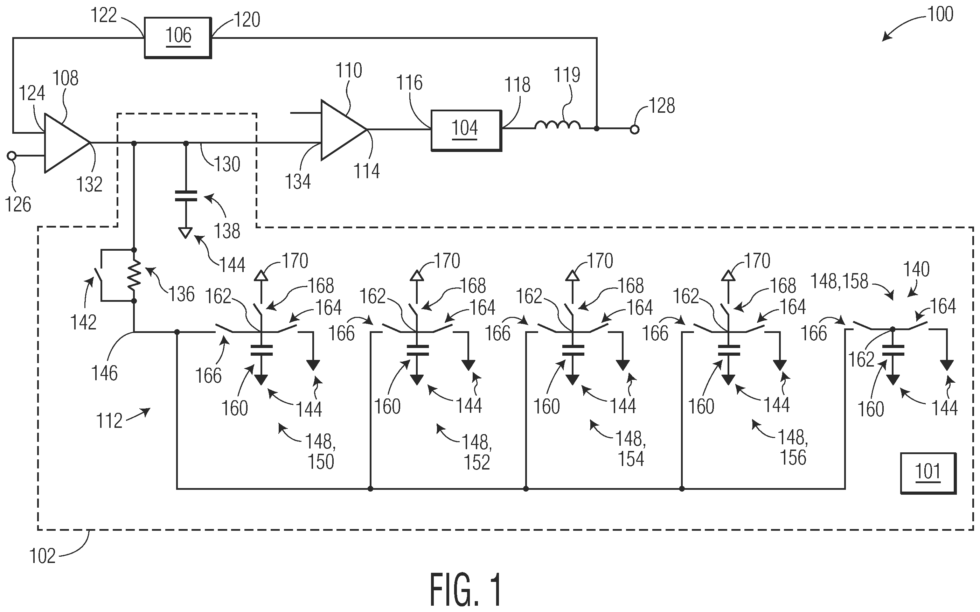

Referring to FIG. 1, a schematic diagram is provided to show an example DC-DC converter (or DC-DC converter circuit) 100 in accordance with an example embodiment encompassed herein. The DC-DC converter 100 includes a compensator (or compensator circuit) 102 in combination with an output power circuit (or output power stage) 104 and a feedback circuit 106. In one sense, the DC-DC converter 100 can be viewed as having two control loops, a first control loop encompassing an amplifier circuit including the output power circuit 104 and the feedback circuit 106, and a second control loop formed by the compensator 102 (which can be viewed as a resistor/capacitor (RC) circuit). Although not shown, the output power circuit 104 can include a high-side transistor and a low-side transistor, which can for example be bipolar junction transistors (BJTs) or other transistor devices.

In the present example embodiment, the compensator 102 includes a control circuit (for example, a controller, a microprocessor, or an application specific integrated circuit) 101, an error amplifier 108, a PWM comparator 110, and an intermediate circuit network 112. Although in the present description the compensator 102 is described as including all of these components (108, 110, 112, and 101), it is also appropriate to view (or define) the compensator as specifically constituting the intermediate circuit network 112 and to view the error amplifier 108 and the PWM comparator 110 (and the control circuit 101) as being parts of the DC-DC converter 100 that are external to the compensator. Further as shown in FIG. 1, the PWM comparator 110 has an output port 114 that is coupled to an input port 116 of the output power circuit 104. The output power circuit 104, at an output port (or node) 118 thereof, provides an output signal (e.g., an output voltage and/or output current), which can be provided to a load via an output node 128 (which can be the same electrical node as the output port 118). Additionally, the output port 118 is coupled to an input port 120 of the feedback circuit 106. An output port 122 of the feedback circuit 106 in turn is coupled to a first input port 124 of the error amplifier 108, which also includes a second input port 126 at which is received a reference voltage (V_{ref}). Although the control circuit 101 is included as part of the compensator 102 in the present example embodiment, in alternate embodiments the control circuit is distinct from the compensator but can still constitute a part of the DC-DC converter 100, or alternatively can be distinct from the DC-DC converter.

During operation, based upon the difference between a feedback signal received from the feedback circuit 106 at the first input port 124 and the reference voltage received at the second input port 126, the amplifier 108 provides a signal to the PWM comparator 110. In turn, the PWM comparator provides a control signal to the output power circuit 104 and thereby governs the output provided at the output node 128 (e.g., for receipt by a load not shown).

Further with reference to FIG. 1, within the compensator 102, a node 130 is provided at which each of the error amplifier 108, the PWM comparator 110, and the intermediate circuit network 112 are coupled. The node 130 can be considered to constitute a part of the intermediate circuit network 112, and particularly constitutes a connection between (and serves as both of) an output port 132 of the error amplifier 108 and an input port 134 of the PWM comparator. Further, the intermediate circuit network 112 additionally includes each of a stabilization resistor 136 (R_zero), a high-frequency capacitor 138 (C_high_frequency), a switched capacitor network (or bank of switched capacitors) 140, and a transfer switch 142 coupled in parallel with the stabilization resistor 136. The high-frequency capacitor 138 is coupled between the node 130 and a ground node 144. The stabilization resistor 136 and the transfer switch 142 are coupled, in parallel, between the output node 128 and a further node 146 (which can also be referred to as a capacitance integrator node, an integrator node, or a "vcap_integrator node") of the switched capacitor network 140.

Additionally as shown in FIG. 1, in the present example embodiment, the switched capacitor network 140 includes a plurality of switched (or switchable) capacitor circuit portions 148. Each of the switched capacitor circuit portions 148 can be viewed (in some circumstances) as constituting a capacitor digital-to-analog circuit. More particularly, in the present example embodiment, the plurality of switched capacitor circuit portions 148 includes each of a first switched capacitor circuit portion 150, a second switched capacitor circuit portion 152, a third switched capacitor circuit portion 154, a fourth switched capacitor circuit portion 156, and a fifth switched capacitor circuit portion 158 (albeit, as mentioned further below, in alternate embodiments any arbitrary number of switched capacitor circuit portions can be provided). Each of the first switched capacitor circuit portion 150, the second switched capacitor circuit portion 152, the third switched capacitor circuit portion 154, the fourth switched capacitor circuit portion 156, and the fifth switched capacitor circuit portion 158 includes a respective capacitor 160 coupled between a respective internal node 162 and the ground node 144, a respective first (pchg_lo) switch 164 also coupled between the respective internal node 162 and the ground node 144, and a respective second switch 166 coupled between the respective internal node 162 and the further node 146. Additionally, each of the first switched capacitor circuit portion 150, the second switched capacitor circuit portion 152, the third switched capacitor circuit portion 154, and the fourth switched capacitor circuit portion 156 (but not the fifth switched capacitor circuit portion 158) also includes a respective third (pchg_hi) switch 168 coupled between the respective internal node 162 and a reference voltage (or power supply, power source, or vdd) node 170. It should be recognized that each of the respective internal nodes 162 of the first switched capacitor circuit portion 150, the second switched capacitor circuit portion 152, the third switched capacitor circuit portion 154, the fourth switched capacitor circuit portion 156, and the fifth switched capacitor circuit portion 158 respectively are distinct nodes that can take on different respective voltages (albeit, in some operational circumstances, it is also possible that two or more of the internal nodes 162 can share the same voltage depending upon the statuses of the respective first switches 164, the respective second switches 166, and the respective third switches 168). Also, each of the respective first switches 164, the respective second switches 166, and the respective third switches 168 of the first switched capacitor circuit portion 150, the second switched capacitor circuit portion 152, the third switched capacitor circuit portion 154, the fourth switched capacitor circuit portion 156, and the fifth switched capacitor circuit portion 158 are controlled independently and independently actuatable.

It should be appreciated that, in the present example embodiment, each of the first switched capacitor circuit portion 150, the second switched capacitor circuit portion 152, the third switched capacitor circuit portion 154, the fourth switched capacitor circuit portion 156, and the fifth switched capacitor circuit portion 158 is identical except that (a) the fifth switched capacitor circuit portion 158 lacks a respective third (pchg_hi) switch by which the respective internal node 162 might be coupled to the reference voltage node 170, and (b) each of the respective capacitors 160 of the respective first, second, third, fourth, and fifth switched capacitor circuit portions 150, 152, 154, 156, and 158, respectively, has a respective different capacitance value. More particularly, in the present example embodiment, the respective capacitor 160 of the first switched capacitor circuit portion 150 has a capacitance value of 64 picofarads (pF), the respective capacitor 160 of the second switched capacitor circuit portion 152 has a capacitance value of 32 pF, the respective capacitor 160 of the third switched capacitor circuit portion 154 has a capacitance value of 16 pF, the respective capacitor 160 of the fourth switched capacitor circuit portion 156 has a capacitance value of 8 pF, and the respective capacitor 160 of the fifth switched capacitor circuit portion 158 has a capacitance value of 4pF (in another embodiment, however, this capacitance value can be 2pF).

Based upon the respective positions of the first, second, and third switches 164, 166, and 168, respectively, of each of the switched capacitor circuit portions 148, respectively, the respective internal nodes 162 and thus the respective capacitors 160 of each of the respective switched capacitor circuit portions can be coupled to any of the reference voltage node 170, the ground node 144, or the further node 146. Similarly, based upon the respective positions of the first switch 164 and second switch 166 of the fifth switched capacitor circuit portion 158, the respective internal node 162 and thus the respective capacitor 160 of that respective switched capacitor circuit portion can be coupled to any of the ground node 144 or the further node 146. More particularly, if the respective third switch 168 of any respective one of the first, second, third, and fourth switched capacitor circuit portions 150, 152, 154, and 156, respectively, is closed but the respective second switch 166 and the respective first switch 164 of that respective one of the switched capacitor circuit portions is opened, then the respective internal node 162 of that respective one of the switched capacitor circuit portions will be coupled to the reference voltage node 170 and consequently there will be a nonzero potential (voltage differential) applied across the respective capacitor 160 of that respective one of the switched capacitor circuit portions.

Further, if the respective first switch 164 of any respective one of the first, second, third, and fourth switched capacitor circuit portions 150, 152, 154, and 156, respectively, is closed but the respective second switch 166 and the respective third switch 168 of that respective one of the switched capacitor circuit portions is opened, then the respective internal node 162 of that respective one of the switched capacitor circuit portions will be coupled to the ground node 144 and consequently there will be zero potential (voltage differential) applied across the respective capacitor 160 of that respective one of the switched capacitor circuit portions. Likewise, if the respective first switch 164 of the fifth switched capacitor circuit portion 158 is closed but the respective second switch 166 of that fifth switched capacitor circuit portion is opened, then the respective internal node 162 of that fifth switched capacitor circuit portion will be coupled to the ground node 144 and consequently there will be zero potential applied across the respective capacitor of that fifth switched capacitor circuit portion. Also, if the respective second switch 166 of any of the switched capacitor circuit portions 150, 152, 154, and 156 is open and, before that respective second switch 166 is closed, both of the respective first switch 164 and the respective third switch 168 of the respective switched capacitor circuit portion are opened, then the respective internal node 162 (and the respective capacitor 160) of the respective switched capacitor circuit portion will be in a floating state.

Further, as described in more detail below, when operating in the light load (or no load, or PFM) mode, the respective second switches 166 of the respective switched capacitor circuit portions can be open-circuited, and the respective internal nodes 162 of the respective switched capacitor circuit portions can be set to either zero Volts (the voltage at the ground node 144) or the reference voltage (the voltage at the reference voltage node 170, vdd) so as to precharge the respective capacitors 160 to zero Volts or the reference voltage (vdd). Whether the respective first switches 164 or the respective third switches 168 are opened or closed to set the respective capacitors 160 to zero Volts or to the reference voltage (vdd) in any given circumstance will depend upon the predetermined voltage desired to be subsequently preset on the compensation capacitor. Typically, during operation, no more than one (e.g., only one or none) of the respective switches 164, 166, and (where present) 168 that are coupled to the respective capacitors 160 of any given one of the respective switched capacitor circuit portions are closed at any given time. Also as described in more detail below, the predetermined voltage that will be preset on the compensation capacitor can be calculated in the manner of a digital-to-analog converter (DAC), for example, in accordance with Equations (1) or (2) provided below.

Additionally, if the respective second switch 166 of any respective one of the first, second, third, and fourth switched capacitor circuit portions 150, 152, 154, and 156, respectively, is closed but the respective first switch 164 and the respective third switch 168 of that respective one of the switched capacitor circuit portions is opened, then the respective internal node 162 of that respective one of the switched capacitor circuit portions will be coupled to the further node 146 and consequently the voltage (or potential) existing at the internal node will be applied to the further node and/or the voltage at the internal node will take on the voltage existing at the further node 146. Further, when this occurs, the capacitance associated with the respective capacitor 160 of that respective one of the switched capacitor circuit portions will be coupled between the further node 146 and the ground node 144. Likewise, if the respective first switch 164 of the fifth switched capacitor circuit portion 158 is opened but the respective second switch 166 of that fifth switched capacitor circuit portion is closed, then the respective internal node 162 of that fifth switched capacitor circuit portion will be coupled to the further node 146 and consequently the voltage (or potential) existing at the internal node will be applied to the further node and/or the voltage at the internal node will take on the voltage existing at the further node 146. Further, when this occurs, the capacitance associated with the respective capacitor 160 of that fifth switched capacitor circuit portion (e.g., in this example 2 pF) will be coupled between the further node 146 and the ground node 144.

Additionally, if the respective second switches 166 of more than one of the respective switched capacitor circuit portions 148 are closed and the other respective switch or switches of those respective switched capacitor circuit portions (either both of the respective first switch 164 and the respective third switch 168 of any of the first, second, third, and fourth switched capacitor circuit portions 150, 152, 154, and 156, or the respective first switch 164 in the case of the fifth switched capacitor circuit portion 158) is or are opened, then the respective capacitors 160 of all of those more than one respective switched capacitor circuit portions will be coupled in parallel between the further node 146 and the ground node 144. Accordingly, the respective capacitances of the respective capacitors 160 of those more than one respective switched capacitor circuit portions will all be coupled between the further node 146 and the ground node 144, such that the further node 146 will experience an overall capacitance associated with those respective capacitors 160 equal to the sum of the respective capacitances of those respective capacitors.

For example, with respect to the embodiment of FIG. 1, if the respective second switches 166 of all of the respective switched capacitor circuit portions 150, 152, 154, 156, and 158 are closed, and if all of the respective first switches 164 and third switches 168 of all of those respective switched capacitor circuit portions are opened (with there not being any respective third switch being present in the fifth switched capacitor circuit portion 158), then the further node 146 will experience a capacitance of 64 pF relative to the ground node 144 due to all of the respective capacitors 160 of all of those switched capacitor circuit portions. Alternatively, also for example with respect to the embodiment of FIG. 1, if the respective second switches 166 of the first, third, and fourth switched capacitor circuit portions 150, 154, and 156, respectively, are closed, if all of the respective first switches 164 and third switches 168 of all of those respective first, third, and fourth switched capacitor circuit portions are opened, and if the respective second switches 166 of the second and fifth switched capacitor circuit portions 152 and 158 are opened, then the further node 146 will experience a capacitance of 44 pF relative to the ground node 144 due to the respective capacitors 160 of the first, third, and fourth switched capacitor circuit portions 150, 154, and 156.

Notwithstanding the switched capacitor network 140 that is shown in FIG. 1, the present disclosure encompasses numerous alternate embodiments of switched capacitor networks. For example, although the switched capacitor network 140 of FIG. 1 includes five (5) different ones of the switched capacitor circuit portions 148 and correspondingly includes five (5) different ones of the capacitors 160, other embodiments of switched capacitor networks can include less than five or greater than five switched capacitor circuit portions and, correspondingly, less than five ones of the capacitors 160 or greater than five ones of the capacitors 160. In practice, DC-DC converters employing switched capacitor networks encompassed by the present disclosure will typically range, in terms of the number of switched capacitor circuit portions and corresponding capacitors included therewithin, from at least three switched capacitor circuit portions and correspondingly at least three capacitors (with one capacitor provided respectively in each of the switched capacitor circuit portions), to a maximum of ten (10) switched capacitor circuit portions and correspondingly a maximum of ten (10) capacitors (with one capacitor provided respectively in each of the switched capacitor circuit portions). Nevertheless, this example range of switched capacitor circuit portions and corresponding range of capacitors from three to ten is merely an example. The present disclosure encompasses embodiments of DC-DC converters having any arbitrary number of switched capacitor circuit portions and/or any arbitrary number of capacitors, including embodiments having merely one or two switched capacitor circuit portions and/or capacitors, as well as embodiments having more than two (or even more than ten) switched capacitor circuit portions and/or more than two (or even more than ten) capacitors.

Also, the capacitance values of the various capacitors within different switched capacitor circuit portions of different switched capacitor networks can vary depending upon the embodiment. For example, although the capacitance values of the respective capacitors 160 of the first, second, third, fourth, and fifth switched capacitor circuit portions 150, 152, 154, 156, and 158, respectively, need not be 32, 16, 8, 4, and 2 pF, respectively, as described above, but alternatively can be 64, 32, 16, 8, and 4 pF, respectively, or other values. Indeed, although the aforementioned capacitor values of the respective capacitors 160 are all related by a factor of two, the respective capacitance values of different ones of the capacitors need not be related by a particular factor, but rather can take an any arbitrary capacitance values suitable for the embodiment. For example, in some further embodiments, each of the capacitors of successive ones of the switched capacitor circuit portions can all have the same value (e.g., a series of capacitors with unit capacitances can be employed).

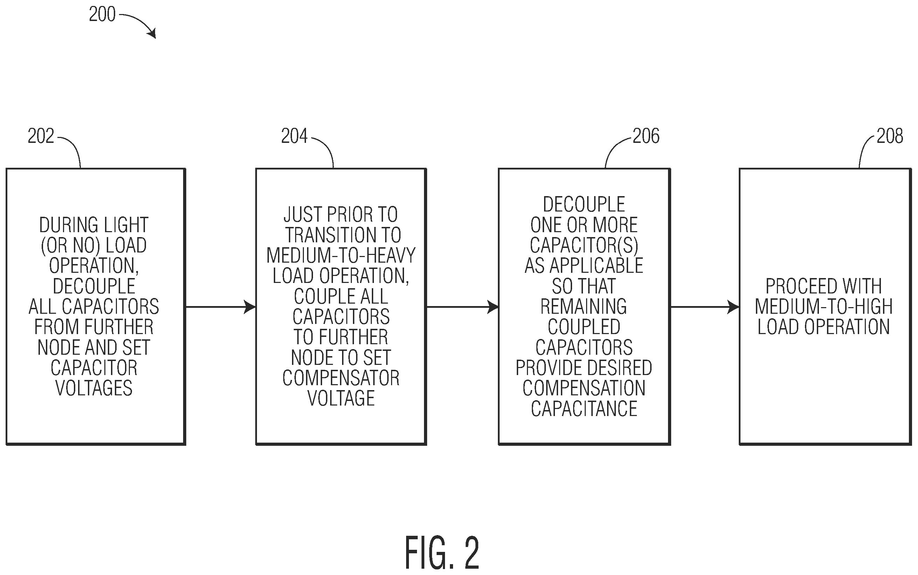

Turning to FIG. 2, a flow chart 200 illustrates an example process of how, in at least one circumstance, the DC-DC converter 100 and particularly the compensator 102 thereof can operate during a transition from light load (or no load) operation to medium-to-high load operation. As shown, the process represented by the flow chart 200 can be assumed to begin at a first step 202, at a time when the DC-DC converter is performing light load (or no load) operation. At the first step 202, during light load (or no load) operation, the respective second switch 166 of each of the switched capacitor circuit portions 148 is opened. Thus, each of the internal nodes 162 and thus each of the respective capacitors 160 of each of the first, second, third, fourth, and fifth switched capacitor circuit portions 150, 152, 154, 156, and 158 is disconnected from the further node 146. Given the open status of each of the second switches 166, at the time of the first step 202, each of the internal nodes 162 and thus each of the respective capacitors 160 of each of the switched capacitor circuit portions 148 can be coupled to the reference voltage node 170 or to the ground node 144, and thus be charged to the reference (or power supply) voltage (vdd) or to ground.

More particularly, during such light load (or no load) operation, one of the first and third switches 164 and 168 is opened and the other one of the first and third switches 164 and 168 is closed for each of the first, second, third and fourth switched capacitor circuit portions 150, 152, 154, and 156. With respect to each of these switched capacitor circuit portions 150, 152, 154, and 156, the selection of whether the respective internal node 162 and thus the respective capacitor 160 is coupled to the reference voltage node 170 (vdd) or ground node 144 depends on the code representing the voltage desired. That is, in the present example at the first step 202, the settings of the first and third switches 164 and 168 are programmed (or established consistent with programming) so that desired voltages appear at the respective internal nodes 162 of each of the first, second, third, and fourth circuit portions 150, 152, 154, and 156. Also, during light load (or no load) operation corresponding to the first step 202, the first switch 164 of the fifth switched capacitor circuit portion 158 is closed such that the internal node 162 and thus the capacitor 160 of that fifth switched capacitor circuit portion is (always) switched to ground. This state consumes no DC current.

Notwithstanding the above manner of operation occurring during light load (or no load) operation, if a transition away from light load (or no load) operation is about to occur, then at a second step 204 just prior to medium-to-high (or medium-to-heavy, or PWM) load operation commencing, all of the capacitors 160 of all of the switched capacitor circuit portions 148 are connected to the further node (which, again, can also be referred to as the vcap_integrator node) 146. When connected in this manner, the various capacitor circuits are effectively integrated, and the voltage at the further node 146 (or the vcap_integrator voltage) quickly settles to the desired programmed voltage. That is, the voltage at the further node 146 substantially immediately settles to a final capacitor voltage (v_capacitor) that is consistent with the all of the voltages that were applied to the internal nodes 162 (and thus to the respective capacitors 160) of all of the first, second, third, fourth, and fifth switched capacitor circuit portions 150, 152, 154, 156, and 158.

In general, for a switched capacitor network of a compensator having n switched capacitor circuit portions, the final capacitor voltage (v_capacitor) can be determined in accordance with Equation (1): $v_capacitor = \left(C0*\left(vdd or 0V\right)+C1*\left(vdd or 0V\right)+…Cn*\left(vdd of 0V\right)\right) / Ctotal$ (1) where v_capacitor is the voltage of the capacitor, vdd is the supply voltage of the circuit, Ctotal is the total capacitance in the switched capacitor network, and C0, C1, ... Cn are the distributed capacitors of the same network that must be charged to vdd or 0v to achieve the desired voltage. The voltage can be selected by programming the select lines of the switches. Further for example, with respect to the present example embodiment of FIG. 1 in which the switched capacitor network 140 of the compensator 102 includes five (5) of the switched capacitor circuit portions 148 having the respective capacitors 160 with capacitances noted above, and assuming that only the internal node 162 of the first switched capacitor circuit portion 150 is coupled to the reference voltage node 170, then in this case the final capacitor voltage (v_capacitor) would be calculated as shown in Equation (2): $v_capacitor = \left(32pF*1.6V+16pF*0V+8pF*0V+4pF*0V\right) / 64 pF = 0.5 * 1.6 V = 0.800 V$ (2)

Subsequently, at a third step 206, any one or more of the respective capacitor(s) 160 of the first, second, third, fourth, and fifth switched capacitor circuit portions 150, 152, 154, 156, and 158 that are not required for compensation are then disconnected (or decoupled) from the further node 146 by reopening the respective second switches 166 of the respective one(s) of the first, second, third, fourth, and fifth switched capacitor circuit portions that include those respective capacitor(s). After this disconnecting occurs, those one(s) of the respective capacitor(s) 160 of the respective switched capacitor circuit portions 148 which remain coupled to the further node 146 (because corresponding one(s) of the respective second switches 166 remain closed) then can act as a compensation capacitance for the compensator 102 and the DC-DC converter 100. This allows tuning of the compensation capacitance, if no tuning of compensation capacitance is needed, the total capacitance can be divided in the proposed ratio and all get connected upon switching from PFM to PWM, so that it does not require any more capacitance as the compensation capacitance required for the operation. Although the above description of third step 206 envisions that typically one or more the respective capacitors 160 will be disconnected from the further node 146, in at least some circumstances (or with respect to some embodiments) it is possible that none of the respective capacitors 160 will be disconnected at the third step 206 because it is desired that the compensation capacitance be the capacitance provided by all of the switched capacitor circuit portions 148.

Further, at a fourth step 208, after the compensation capacitance has been set at the third step 210, the DC-DC converter 100 can proceed with operating in the medium-to-high load operation.

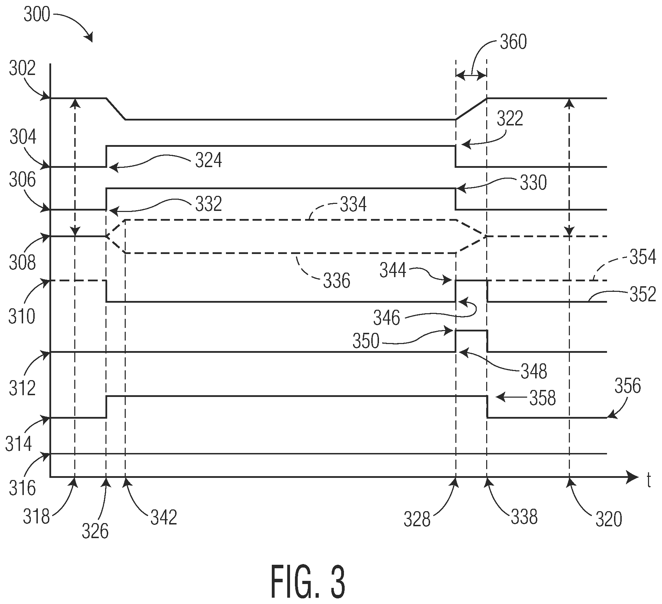

Turning to FIG. 3, a timing diagram 300 is additionally provided to further illustrate how, in at least one circumstance, the DC-DC converter 100 and particularly the compensator 102 thereof can operate during transitions between light load (or no load, or PFM) operation and medium-to-high load (or medium-to-heavy load, or PWM) operation. The timing diagram 300 particularly includes first, second, third, fourth, fifth, sixth, seventh, and eighth curves 302, 304, 306, 308, 310, 312, 314, and 316, respectively, which illustrate example variation of different operations and characteristics of the compensator 102 of the DC-DC converter 100 over time, between a first time 318 and a second time 320. The first curve 302 is representative of the voltage at the further node 146 (vcap_integrator voltage or integrator capacitor voltage). The second curve 304 shows whether the compensator 102 (or the DC-DC converter 100) is operating in the light load (or no load, or PFM) mode of operation or in the medium-to-high (or PWM) mode of operation. A high level or value 322 of the second curve 304 signifies light load (or no load, or PFM) operation and a low level or value 324 of the second curve signifies medium-to-high load (or PWM) operation. It should be appreciated from the second curve that, in the present illustration, the compensator 102 is operating in the medium-to-high (or PWM) mode of operation both at the first time 318 and also at the second time 320, switches from the medium-to-high mode of operation to the light load mode of operation at a third time 326 subsequent to the first time 318, and switches back from the light load mode of operation to the medium-to-high mode of operation at a fourth time 328 between the third time 326 and the second time 320.

The third (discharge_vcap_node) curve 306 is representative of an internal signal (or status) of the compensator 102 according to which, when the third curve 306 has a high level 330, this signifies that a status has been attained or an action has been taken (e.g., a switch has been opened or closed), such that the further node 146 (vcap_integrator voltage) is caused to discharge (that is, the capacitor node is actively discharged). Although not shown, such discharging can for example be governed by NMOS control (N-type metal-oxide-semiconductor control). Alternatively, when the third curve 306 has a low level 332, this signifies that the status or action causing the further node 146 to discharge is not present and consequently the further node 146 is not caused to discharge at such times. In the present example, the third curve 306 transitions between the low level 332 and the high level 330 at the same times as the second curve 304. That is, in the present example, the third curve 306 transitions from the low level 332 to the high level 330 at the third time 326, and transitions from the high level 330 to the low level 332 at the fourth time 328. Accordingly, in the present example embodiment, the compensator 102 operates to discharge the further node 146 particularly when the compensator is operating in the low load (or no load, or PFM) mode of operation.

The fourth curve 308 represents the setting (or precharging) of the capacitors 160 of the first, second, third, fourth, and fifth switched capacitor circuit portions 150, 152, 154, 156, and 158 to have particularly desired voltages (voltage potentials across the respective capacitors), particularly during the light load mode of operation. In the present embodiment, this is achieved by actuating the respective first (pchg_lo) switches 164 and the respective third (pchg_hi) switches 168 of the first, second, third, fourth, and fifth switched capacitor circuit portions 150, 152, 154, 156, and 158, while the respective second switches 166 of those respective switched capacitor circuit portions are open. Such actuation of the first (pchg_lo) switches 164 and the third (pchg_hi) switches 168 can be controlled in accordance with "select_vhold<3.0>" signals, which can be provided by the control circuit 101. With the first switches 164, second switches 166, and third switches 168 actuated (opened or closed) in the aforementioned manners, the respective internal nodes 162 of those respective switched capacitor circuit portions 148 are set either to the voltage of the reference voltage node 170 or to the ground voltage (e.g., zero volts) of the ground node 144.

More particularly, the respective internal nodes 162 of the respective first, second, third, and fourth switched capacitor circuit portions 150, 152, 154, and 156 are set to the voltage of the reference voltage node 170 if the respective third switches 168 of those respective switched capacitor circuit portions are closed and the respective second switches 166 and the respective first switches 164 of those respective switched capacitor circuit portions are opened. Also, the respective internal nodes 162 of the respective first, second, third, fourth, and fifth switched capacitor circuit portions 150, 152, 154, 156, and 158 are set to the ground voltage of the ground node 144 if the respective first switches 164 of those respective switched capacitor circuit portions are closed and the respective second switches 166 and the respective third switches 168 of those respective switched capacitor circuit portions (particularly in the case of the first, second, third, and fourth switched capacitor circuit portions with respect to the third switches) are opened.

The particular voltages to which the different ones of the capacitors 160 of the switched capacitor circuit portions 148 are set can vary depending upon the embodiment or operational circumstance, or as may be determined to be desirable. The fourth curve 308 illustrates in a generalized manner that any one or more of the capacitors 160 of the first, second, third, fourth, and fifth switched capacitor circuit portions 150, 152, 154, 156, and 158 can be set to either the reference voltage node 170 voltage (vdd) or to the ground voltage (or, with respect to the fifth switched capacitor circuit portion 158, the capacitor can be set to the ground voltage or not to the ground voltage), by showing the fourth curve as a split curve including both a high curve portion 334 and a lower curve portion 336 between the third time 326 when light load operation begins and a fifth time 338 occurring shortly after the fourth time 328. That is, the high curve portion 334 signifies that any one or more of the capacitors 160 of the first, second, third, and fourth switched capacitor circuit portions 150, 152, 154, and 156 can take on the reference voltage node 170 voltage (vdd), and the lower curve portion 336 signifies that any one or more of those capacitors of those switched capacitor circuit portions and/or the capacitor of the fifth switched capacitor circuit portion 158 can instead take on the ground voltage.

As mentioned above, the respective first (pchg_lo) switches 164 and the respective third (pchg_hi) switches 168 can be actuated by (or in response to) respective first control signals directed to those respective switches, which can be referred to as "select_vhold<3.0>" signals. Actuation of the switches 164 and 168 in the present embodiment can be considered to constitute "programming" of the capacitors, in terms of the capacitors' respective charges or voltages (or in terms of capacitor charge voltages). As illustrated by the fourth curve 308, such actuation of the first switches 164 and the third switches 168 does not occur while the compensator 102 is in the medium-to-high (PWM) mode of operation and thus the fourth curve 308 has middle-level curve portions 340 prior to the third time 326 and after the fifth time 338. Rather, during these time periods when the compensator 102 is in the medium-to-high (PWM) mode of operation, all of the first switches 164 and the third switches 168 are open-circuited. Further, the fourth curve 308 shows that the actuation of the first (pchg_lo) switches 164 and the respective third (pchg_hi) switches 168 are not necessarily instantaneous. Rather, in the present embodiment as illustrated, upon the compensator 102 switching from the medium-to-high load mode of operation to the light load (or no load) mode of operation at the third time 326, the actuation of the switches 164 and 168 is not completed until a sixth time 342 occurring shortly after the third time (well before the fourth time 328). Similarly, upon the compensator 102 switching from the light load (or no load) mode of operation to medium-to-high load mode of operation at the fourth time 328, the deactuation of the switches 164 and 168 is not completed until the fifth time 338.

In contrast to the fourth curve 308, which relates to the setting of the respective capacitors 160 of the respective switched capacitor circuit portions 148 to respective desired voltages, the fifth curve 310 shows how those respective capacitors after being set to the respective desired voltages can then be coupled to the further node 146 (vcap_integrator node) at a time just prior to, and further at and after, the fourth time 328 when the compensator 102 transitions from the light load (or no load, or PFM) mode of operation to the medium-to-high (PWM) mode of operation. In this regard, the fifth curve 310 can be considered to represent second control (or internal signals) signals directed to the respective second switches 166 of the respective switched capacitor circuit portions 148, which can be referred to as "transfer_switches<3.0>" signals. That is, the fifth curve 310 illustrates the second control signals that can be employed in an example embodiment to govern the actuation of the second switches 166 of the switched capacitor circuit portions 148 (again, such second control signals can be provided by the control circuit 101). Further, the sixth curve 312 additionally shows how charge is transferred to the further node 146 as a result of the coupling of the capacitors 160 to the further node 146 as represented by the fifth curve 310.

More particularly as shown, prior to the third time 326 at which the compensator 102 switches from the medium-to-high (PWM) mode of operation to the light load (or no load, or PFM) mode of operation, the fifth curve 310 can have a high level 344 (as represented by a dashed line) signifying that one or more of the second switches 166 will be short-circuited, as described further below. Then, at the third time 326, the fifth curve 310 transitions from the high level 344 to a low level 346 signifying that all of the second switches 166 are commanded to be open-circuited. This is consistent with, as described above with respect to the fourth curve 308, the light load mode of operation in which ones of the first switches 164 and third switches 168 are closed to set the voltages of the capacitors 160.

However, just prior to (and effectively at) the fourth time 328 at which the compensator 102 transitions from the light load mode of operation to the medium-to-high mode of operation, the fifth curve 310 transitions from the low level 346 to the high level 344. When the fifth curve 310 attains the high level 344, this signifies that all of the second switches 166 are closed such that the voltages of the capacitors 160 of all of the first, second, third, fourth, and fifth switched capacitor circuit portions 150, 152, 154, 156, and 158 are applied to the further node 146 (vcap_integrator node). The further node 146 thus is set to and attains a desired/programmed compensator voltage, for example, as can be calculated by Equation (1) above. Correspondingly, at the fourth time 328, the sixth curve 312 also switches from a low level 348 to a high level 350 signifying that the further node 146 is attaining a new (or higher) charging level due to the coupling of the capacitors 160 to the further node. All of the capacitance associated with all of the capacitors 160 of all of the switched capacitor circuit portions 148 (e.g., coupled in parallel between the further node 146 and ground) is employed for this purpose of transferring the charge.

The communication of the voltages (particularly as present at the internal nodes 162) and charge associated with all of the capacitors 160 of all of the switched capacitor circuit portions 148 to the further node 146 does not take much time. More particularly, as illustrated in FIG. 3, the communication of the voltages and charge to the further node 146, and equilibration of all of the capacitors 160, takes place over a T_transfer time 360, which equals the difference between the fourth time 328 and the fifth time 338. Accordingly, at the fifth time 338, a solid portion 352 of the fifth curve 310 as illustrated in FIG. 3 returns to the low level 346 and also the sixth curve returns to the low level 348.

However, as already discussed, in the present example embodiment the switched capacitor network 140 of the compensator 102 not only serves to set the further node (vcap_integrator node) 146 to a desired voltage, but also serves to provide an appropriate compensation capacitance. Accordingly, although the fifth curve 310 includes the solid portion 352 at the low level 346 after the fifth time 338, the fifth curve 310 also includes a dashed portion 354 at the high level after the fifth time 338. The dashed portion 354 signifies that one or more of the second switches 166 of the switched capacitor network 140 may remain closed even after the fifth time 338 so that one or more of the capacitors 160 remain coupled to the further node 146 even after the fifth time 338. With such one or more of the capacitors 160 remaining coupled to the further node 146, those capacitor(s) can serve as the compensation capacitance for the compensator 102.

Further, the seventh curve 314 represents a signal (which again can be provided by the control circuit 101) that is provided to the transfer switch 142 and controls whether that transfer switch is actuated to be closed so as to short out the stabilization resistor 136 or alternatively is open-circuited so that the stabilization resistor 136 remains active in the compensator 102. As shown, in the present example embodiment, the seventh curve 314 has a low level 356 prior to the third time 326 and after the fifth time 338, but has a high level 358 between the third time 326 and the fifth time 338. This signifies that, between the third time 326 and the fifth time 338, and particularly between the fourth time 328 and the fifth time 338, the stabilization resistor 136 is shorted out to allow for charging of the high-frequency capacitor 138 (C_high_frequency).

Finally, the eighth curve 316 represents programming the compensation capacitance by providing certain signals, namely, "Select_compensation<3.0> signals"-these signals do not change between the light load (or no load, or PFM) mode of operation and the medium-to-high (or PWM) mode of operation, and so the eighth curve 316 is shown to be constant between the first time 318 and the second time 320. In the present example embodiment, only the light load mode signal represented by the second curve 304, the select_vhold<3:0> signal(s) (or select lines) governing actuation of the respective first (pchg_lo) switches 164 and the respective third (pchg_hi) switches 168 as represented by the fourth curve 308, and the select compensation<3:0> signal(s) (or select lines) as represented by the eighth curve 316 are provided from an external source (e.g., an external control device not shown in FIG. 1). All other signals are generated inside the DC-DC converter 100.

Further, in the present example embodiment, the DC-DC converter 100 chip's digital finite state machine (FSM), which can be provided by the control circuit 101, controls the ON/OFF of various blocks of the chip along with sensing and reporting of important telemetry information about key node voltages and currents. Based on the sensed telemetry information about Vin (e.g., the voltage applied at the first input port 124), Vout (e.g., the voltage output at the output node 128), and Iout (e.g., the current output at the output node 128), the FSM can be used to program the select_vhold<3:0> and select_compensation<3:0> signals to ensure that the output voltage disturbance is minimal. To ensure this, the digital FSM will have a stored set of values in a Look-up-table (LUT) corresponding to various operating points for the DC-DC converter 100. For example, in one example scenario in which Vin = 12V (12 Volts), Vout = 5V, Iout_pfm threshold = 1A (1 Ampere), then Select_compensation<3:0> = 8 (e.g., corresponds to an arbitrarily designed compensation capacitance of 32pF) and Select_vhold<3:0> = 8 (e.g., corresponds to the amount of capacitive division needed to charge the integrator capacitance node).

Notwithstanding the particular features of the specific embodiments described above or elsewhere herein, it should be appreciated that the present disclosure encompasses numerous additional embodiments. For example, although the DC-DC converter of FIG. 1 has been described as having the switched capacitor network 140 with five of the capacitor circuit portions 148 having five of the capacitors 160, the present disclosure encompasses other embodiments having switched capacitor networks respectively having any arbitrary number of capacitor circuit portions and/or any arbitrary number of capacitors. For example, some other example embodiments having switched capacitor networks having any of three (3) to ten (10) switched capacitor networks and/or any of three (3) to ten (10) capacitors. Also for example, although the respective first, second, third, fourth, and fifth switched capacitor circuit portions 150, 152, 154, 156, and 158 have been described above as having particular respective capacitance values, the present disclosure envisions other embodiments having capacitors with other arbitrary capacitance values. Although in some embodiments the respective capacitors of the switched capacitor networks have successively-increasing or successively-decreasing capacitance values that are related in a binary manner (that is, where successive capacitance values relate to preceding capacitance values respectively by factors of two, such as a succession of capacitance values of 4 pf, 8 pf, 16 pf, 32 pf, and 64 pf), in other embodiments the various respective capacitors need not have respective values that are related in a binary manner. For example, as mentioned above, in some further embodiments each of the capacitors of successive ones of the switched capacitor networks can all have the same value (e.g., a series of capacitors with unit capacitances can be employed).

Also it should be appreciated that, although the present disclosure envisions embodiments in which the reason to switch from PFM mode to PWM mode is due to a higher load current, depending upon the embodiment this may not be the only reason for switching from PFM mode to PWM mode. In general, embodiments encompassed herein can perform the capacitor precharging and coupling just prior to switching to PWM mode (for any reason). However, in fact, in at least some embodiments or circumstances, the capacitors can be configured to precharge continuously during PFM operation (this would have no impact on the system; no DC current consumption), and merely the coupling (rather than both the precharging and the coupling) would necessarily occur just prior to entering (or substantially at the time of entering) PWM operation.

Additionally, the present disclosure encompasses numerous systems and application that employ DC-DC converters such as the DC-DC converter 100 described above. For example, the present disclosure encompasses power conversion systems and applications, as well as universal serial bus (USB) systems and applications. Further for example, the present disclosure includes systems and applications employing DC-DC converters such as the DC-DC converter 100 for performing perform charging. Additionally for example, the present disclosure includes systems and applications employing DC-DC converters such as the DC-DC converter 100 such as automotive systems, e-bikes, and power tools.

In view of the above discussion, it should be appreciated that one or more of the embodiments encompassed herein are advantageous in one or more respects. For example, at least some embodiments encompassed herein envision a circuit (such as the DC-DC converter 100) that performs at least two operations, namely, (a) charging an integration capacitor (or further node 146 or "vcap_integrator node") to a particular voltage, and (b) connecting a certain amount of capacitance to act as a compensator capacitor. Also for example, at least some embodiments encompassed herein relate to DC-DC converter circuits that are advantageous in that the DC-DC converter circuits involve reduced current draw and achieve enhanced efficiency even when operating in a light load (or no load, or PFM) mode of operation.

While the principles of the invention have been described above in connection with specific apparatus, it is to be clearly understood that this description is made only by way of example and not as a limitation on the scope of the invention. It is specifically intended that the present invention not be limited to the embodiments and illustrations contained herein, but include modified forms of those embodiments including portions of the embodiments and combinations of elements of different embodiments as come within the scope of the following claims.

## Claims

1. A DC-DC converter comprising:
an amplifier circuit including an output power circuit and a feedback circuit;
a compensator circuit coupled to the amplifier circuit, wherein the compensator circuit includes an error amplifier, a comparator, and an intermediate circuit network, wherein the error amplifier has a first input terminal and a first output terminal, wherein the comparator has a second input terminal and a second output terminal,
wherein the second input terminal is coupled to the first output terminal of the error amplifier and the second output terminal is coupled to a further input terminal of the output power circuit, and
wherein the intermediate circuit network includes a first node, at least one first switchable component coupling the first node with the first output terminal of the error amplifier, and a plurality of switched capacitor networks each having a respective capacitor; and
a control circuit coupled to each of the switched capacitor networks, wherein the control circuit is configured at a first time to cause the respective capacitors of the respective switched capacitor networks to attain respective voltages, and wherein the control circuit is configured at a second time to cause the respective capacitors of the respective switched capacitor networks to be coupled to the first node so that the first node attains a compensator voltage.

2. The DC-DC converter of claim 1, wherein each of the respective capacitors of the respective switched capacitor networks is coupled to the first node by a respective capacitor connection switch, wherein the control circuit is configured to provide first control signals to the plurality of switched capacitor networks at the first time to cause the respective capacitors of the respective switched capacitor networks to attain respective voltages, wherein the control circuit is configured to provide second control signals to the plurality of switched capacitor networks at the second time to cause the respective capacitors of the respective switched capacitor networks to be coupled to the first node so that the first node attains the compensator voltage, and wherein the control circuit is further configured to provide third control signals to the plurality of switched capacitor networks at a third time to cause the respective capacitor or the respective capacitors of one or more of the respective switched capacitor networks to be decoupled from the first node, so that a desired compensation capacitance remains coupled to the first node.

3. The DC-DC converter of claim 2, wherein, at the first time, the DC-DC converter is operating in a first operational mode that is at least one of a light load operational mode, a no load operational mode, or a pulse-frequency modulation (PFM) operational mode.

4. The DC-DC converter of claim 3, wherein the second time occurs at or just prior to an additional time at which the DC-DC converter switches from the first operational mode to a second operational mode that is one of a medium load operational mode, a high load operational mode, a heavy load operational mode, a medium-to-high load operational mode, a medium-to-heavy load operational mode, or a pulse-width modulation (PWM) operational mode.

5. The DC-DC converter of claim 4 wherein, at the third time, the DC-DC converter is operating in the second operational mode, and wherein the control circuit operates at least in part based upon a digital finite state machine (FSM) or a look-up table (LUT).

6. The DC-DC converter of any one of claims 2 to 5, wherein each of the switched capacitor networks includes a respective internal node, a respective first switch, and a respective second switch, wherein the respective first switch is coupled between the respective internal node and a ground node, wherein the respective second switch is the respective capacitor connection switch of the respective switched capacitor network and is coupled between the respective internal node and the first node, and wherein each of the respective capacitors of the respective switched capacitor networks is respectively coupled between the respective internal node and the ground node.

7. The DC-DC converter of claim 6 wherein, with respect to one or more of the switched capacitor networks, the respective switched capacitor network includes a respective third switch and the respective third switch is coupled between the respective internal node and a power source node.

8. The DC-DC converter of claim 7, wherein the at least one first switchable component includes a parallel combination of a stabilization resistor and a transfer switch, wherein each of the stabilization resistor and the transfer switch is coupled at least indirectly between the first node and first output terminal, and wherein the DC-DC converter additionally includes a high-frequency capacitor coupled at least indirectly between the first output terminal and the ground node.

9. The DC-DC converter of any preceding claim, wherein the DC-DC converter is at least one of a buck converter, a boost converter, or a buck-boost converter, and wherein the control circuit is comprised by the compensator circuit.

10. A method of controlling a DC-DC converter having an amplifier circuit coupled to a compensator circuit, the compensator circuit including an integrator node and a plurality of switched capacitor networks each having a respective capacitor and a respective capacitor connection switch at least indirectly between the respective capacitor and the integrator node, the method comprising:
at a first time at which the DC-DC converter is operating in a first operational mode, first actuating the respective capacitor connection switches of the respective switched capacitor networks to decouple the respective capacitors of the respective switched capacitor networks from the integrator node so that the respective capacitors can be set to have respective capacitor voltages;
at a second time subsequent to the first time, second actuating the respective capacitor connection switches of the respective switched capacitor networks so that all of the respective capacitors are coupled to the integrator node, so as to establish a compensator voltage at the integrator node; and
at a third time at which the DC-DC converter is operating in a second operational mode, the third time being subsequent to the second time, third actuating a first subset of the capacitor connection switches of the plurality of switched capacitor networks so that each of a first subset of the capacitors of the plurality of switched capacitor networks is decoupled from the integrator node even though each of a second subset of the capacitors of the plurality of switched capacitor networks remains coupled to the integrator node so that a compensation capacitance is coupled to the integrator node.

11. The method of claim 10, wherein the first actuating, the second actuating, and the third actuating are caused by control signals provided by at least one control circuit.

12. The method of claim 11,
wherein, at the first time, the at least one control circuit provides first additional control signals that cause respective additional switches that are coupled between the respective capacitors and respective additional nodes to be closed so that respective additional nodes are coupled at least indirectly to the respective capacitors and so that the respective capacitors are set to have the respective capacitor voltages, and
wherein, at the second time, the at least one control circuit provides second additional control signals that cause the respective additional switches that are coupled between the respective capacitors and the respective additional nodes to be opened.

13. The method of any one of claims 10 to 12, wherein the first operational mode is at least one of a light load operational mode, a no load operational mode, or a pulse-frequency modulation (PFM) operational mode, and the second operational mode is one of a medium load operational mode, a high load operational mode, a heavy load operational mode, a medium-to-high load operational mode, a medium-to-heavy load operational mode, or a pulse-width modulation (PWM) operational mode, and wherein the second time occurs at or just prior to a transition time at which the DC-to-DC converter changes from being in the first operational mode to being in the second operational mode.

14. The method of any one of claims 10 to 13, wherein the compensation circuit includes a parallel combination of a stabilization resistor and a transfer switch, wherein each of the stabilization resistor and the transfer switch is coupled at least indirectly between the integrator node a first output terminal of a comparator of the compensation circuit, and further comprising actuating the transfer switch to short out the stabilization resistor at least during a first time period between the second time and the third time.
